# EUROPÄISCHE PATENTSCHRIFT

(11) **EP 0 948 105 B1**
(45) Veröffentlichungstag und Bekanntmachung des Hinweises auf die Patenterteilung: **30.11.2005**
(21) Anmeldenummer: 99106553.3
(22) Anmeldetag: 30.03.1999
(51) Int. Cl.: H01S 3/03, H01S 3/034

(54) **HF-angeregter Gaslaser**
RF-excited gas laser
Laser à gaz excité par HF

(30) Priorität: 03.04.1998 DE 19815065
(43) Veröffentlichungstag der Anmeldung: 06.10.1999
(73) Patentinhaber: TRUMPF LASERTECHNIK GmbH, D-71254 Ditzingen (DE)
(72) Erfinder: von Borstel, Michael, Dr., 74385 Pleidelsheim (DE)
(74) Vertreter: Kohler Schmid Möbus

(56) Entgegenhaltungen:
- JP-A- 3 194 982
- JP-A- 4 053 282
- JP-A- 4 295 094
- JP-A- 4 348 573
- US-A- 3 516 010
- US-A- 4 897 848

## Beschreibung

### Technisches Gebiet

Die Erfindung bezieht sich auf einen HF-angeregten CO₂-Gaslaser mit wenigstens einem ein Lasergas enthaltenden Laserrohr.

### Stand der Technik

CO₂-Laser werden beispielsweise für die Materialbearbeitung benutzt, und von der Anmelderin in Verbindung mit Schneid- und/oder Schweißvorrichtungen eingesetzt und vertrieben. Hierzu wird auf die US-PS 5,115,446 verwiesen. Auf diese Druckschrift wird im übrigen zur Erläuterung aller hier nicht näher beschriebenen Einzelheiten ausdrücklich Bezug genommen. Die aus dieser Druckschrift bekannten CO₂-Laser weisen einen Laserresonator auf, der zur Verringerung des Platzbedarfs aus mehreren Laserrohren besteht, die durch Spiegelblöcke sowohl strömungsdynamisch als auch optisch miteinander verbunden sind. Auf der Außenseite der Laserrohre ist eine Mehrzahl von Elektroden angeordnet, die das Lasergas mit Hochfrequenz anregen. Die Laserrohre bestehen aus Quarz (SiO₂) mit einer Wandstärke von einigen Millimetern. Bei Laserrohren dieses Typs stellt man insbesondere bei CO₂-Lasem fest, dass nach einer großen Zahl von Betriebsstunden Beeinträchtigungen, wie Aufschmelzungen, Sprünge bzw. Risse in den Laserrohren auftreten. Bislang ist nicht bekannt gewesen, wodurch diese Sprünge bzw. Risse hervorgerufen werden.

Auch bei Laserrohren, die aus einem Keramikmaterial, wie Al₂O₃, oder aus einem Glasmaterial bestehen, wird nach einer gewissen Zahl von Betriebsstunden das Auftreten von Beeinträchtigungen beobachtet.

Beispielsweise beobachtet man bei aus Al₂O₃ bestehenden Laserrohren von CO₂-Lasern nach einer gewissen Betriebszeit, dass sich Löcher bilden, so dass das Laserrohr nicht mehr gasdicht ist.

Aus der US 3,619,808 A ist bekannt, ein Entladungsrohr aus Quarzglas durch Dotierung mit Titandioxid für UV-Strahlung < 270 nm undurchlässig zu machen. Die UV-Strahlung dringt in das Grundmaterial Quarzglas ein und wird dort absorbiert.

US 5,808,411 A offenbart ein Quarzglasrohr für eine Lichtquelle, z.B. Halogenglühlampe oder Hochdruckentladungslampe, wobei das Quarzglas mit UV-absorbierenden und Fluoreszenz-hemmenden Dotierungen versehen ist. Es werden Aussagen zur Auswahl der Dotiermaterialien und der Konzentrationen getroffen. Aufgabe der UV-absorbierenden Dotierungen ist, die Transparenz des Quarzglases für die unerwünschte, gesundheitsschädliche UV-Strahlung drastisch zu reduzieren. Einige UV-absorbierende Dotierungen emittieren durch die UV-Strahlung stimulierte Fluoreszenzstrahlung im sichtbaren Spektrum, die bei vielen Anwendungen unerwünscht ist und daher unterdrückt werden muss.

### Darstellung der Erfindung

Der Erfindung liegt die Aufgabe zugrunde, die Lebensdauer von Laserrohren, die aus Quarzmaterial bestehen, gegenüber der Lebensdauer von nach dem Stand der Technik ausgebildeten Rohren aus diesen Materialien zu verlängern.

Ein Laser, der aufgrund seiner erfindungsgemäßen Ausbildung diese Aufgabe löst, ist im Anspruch 1 angegeben. Weiterbildungen der Erfindung sind Gegenstand der Ansprüche 2 f.

Der Erfindung geht dabei von folgender Vorstellung über den Mechanismus aus, der zu den Beeinträchtigungen des Laserrohrs führt:

Während des Laserbetriebs kann bei HF-angeregten Lasern und insbesondere bei CO₂-Lasern in der Entladung neben der Laserstrahlung zusätzlich Strahlung mit einer Wellenlänge in einem anderen Bereich als dem der Laserstrahlung entstehen. Beispielsweise entsteht bei einem CO₂-Laser, der Laserlicht mit einer Wellenlänge von ca. 10,6 µm emittiert, zusätzlich Strahlung mit Wellenlängen, die sich vom sichtbaren Bereich bis in den UV-Bereich zu Wellenlängen erstrecken, die deutlich kleiner als 250 nm sind.

Diese Strahlung, die im folgenden der Einfachheit halber als "UV-Strahlung" bezeichnet wird, ist nicht parallel zur Längsachse des Laserrohrs ausgerichtet, sondern kann mit der Längsachse beliebige Winkel einschließen, so dass sie insbesondere auf das Laserrohr auftreffen und mit dessen Material wechselwirken kann.

Durch die Wechselwirkung dieser - vergleichsweise hochenergetischen - Strahlung mit dem Material des Laserrohrs entstehen Änderungen in der Struktur des Laserrohr-Materials, die im folgenden als "Defekte" bezeichnet werden. Insbesondere können bei Quarz (SiO₂) - aber auch bei Gläsern oder Keramiken - Defekte und insbesondere sog. Farbzentren, wie E'-Zentren, erzeugt werden, die ein elektrisches Dipolmoment haben.

Die Dipole dieser Defekte können nun ihrerseits mit der HF-Anregungsenergie wechselwirken; dabei können die Defekte einen Teil der Anregungsenergie absorbieren. Durch die absorbierte Energie wird das Laserrohr lokal verändert und gegebenenfalls sogar lokal aufgeschmolzen. Die durch die lokale Veränderung entstehenden Spannungen führen nach einer gewissen Zahl von Betriebsstunden - in der Regel mehreren 1000 Betriebsstunden - zu Beeinträchtigungen, wie Sprüngen, Rissen und/oder Löchern in dem Laserrohr, wobei die Beeinträchtigungen nicht nur in dem Bereich, durch den die Anregungsenergie in das Lasergas eingebracht wird, sondern auch an anderen Stellen auftreten können.

Erfindungsgemäß weist deshalb das Quarzmaterial des Laserrohrs eine solch hohe Titan- bzw. TiO₂-Dotierung auf, dass die UV-Strahlung in dem Quarzmaterial keine Defekte oder nur Defekte in einem (so kleinen) Bereich erzeugen kann, die durch die Absorption der HF-Anregungsenergie keine für den Betrieb des Lasers schädlichen Beeinträchtigungen, wie Sprünge, Risse, Aufschmelzungen oder Löcher ausbilden können.

Die Dotierung des Laserrohrs kann auf die unterschiedlichsten Arten erfolgen und auch auf die unterschiedlichsten Arten wirken:

So kann durch das Dotiermaterial die Eindringtiefe der UV-Strahlung in das Laserrohr auf so kleine Werte reduziert werden, dass Dipole, die mit der HF-Anregungsenergie wechselwirken, nur in einem kleinen Randbereich des Laserrohrs, nicht jedoch im "Hauptteil" des Laserrohrs gebildet werden. Weiterhin kann das Dotiermaterial bevorzugt anstelle des Grundmaterials des Laserrohrs die UV-Strahlung absorbieren und zwar in einer Weise, dass keine Defekte mit einem Dipolmoment gebildet werden, die mit der HF-Anregungsenergie wechselwirken und diese absorbieren.

Überraschenderweise hat sich dabei im Falle von Quarz als Grundmaterial des Laserrohrs herausgestellt, dass nahezu alle zu Schädigungen des Materials des Laserrohrs führenden Defekte vermieden werden, wenn das Dotiermaterial bzw. die Beschichtung so gewählt sind, dass es (lediglich) UV-Licht mit einer Wellenlänge von weniger als 250 nm absorbiert.

Ausdrücklich wird darauf hingewiesen, dass bei anderen Materialien die schädliche Strahlung, durch die Defekte mit einem Dipolmoment erzeugt werden, das mit der HF-Anregungsenergie wechselwirkt, in einem anderen Wellenlängenbereich - gegebenenfalls auch im sichtbaren Bereich - liegen kann.

Die Konzentration von Titan als Dotiermaterial in Quarz ist dabei wesentlich höher als die Konzentration, in der Titan typischerweise in kommerziell erhältlichen (natürlichen oder synthetischen) Quarzmaterialien als Verunreinigung vorliegt. Insbesondere ist die Konzentration größer als 150 ppm und liegt bevorzugt im Bereich von 500 ppm und mehr.

Dabei ist es möglich, dass die Dotiermaterialien in der erforderlichen hohen Konzentration homogen - beispielsweise durch Zugeben zu einer SiO₂-Schmelze - oder nur in einer Randschicht an der Innenseite des Laserrohrs vorliegen.

Verfahren, mit denen ein derartiges "Konzentrationsprofil" erzeugbar ist, sind beispielsweise Oberflächen-Diffusionsverfahren oder Ionenaustauschverfahren.

Die erfindungsgemäßen Maßnahmen können bei induktiv oder kapazitiv angeregten Gaslasern eingesetzt werden. Besonders wirkungsvoll sind sie jedoch bei Lasern, bei denen wenigstens eine der (kapazitiv anregenden) Elektroden, in der Regel sogar beide Anregungselektroden, außerhalb des Laserrohrs angeordnet sind, so dass die gesamte Anregungsenergie durch das Laserrohr hindurch gehen muss.

In diesem Falle ist es ausreichend, die erfindungsgemäßen Maßnahmen nur in dem Bereich des Laserrohrs einzusetzen, durch den die HF-Energie eingebracht wird.

### Kurze Beschreibung der Zeichnung

Die Erfindung wird nachstehend anhand der Zeichnung exemplarisch näher beschrieben, in der zeigen:
- Fig. 1: einen Längsschnitt und einen Querschnitt durch einen erfindungsgemäß weitergebildeten Laser,
- Fig. 2a und 2b: in einer Detaildarstellung aus Fig. 1 im Längs- bzw. Querschnitt verschiedene Alternativen.

### Beschreibung von Ausführungsbeispielen

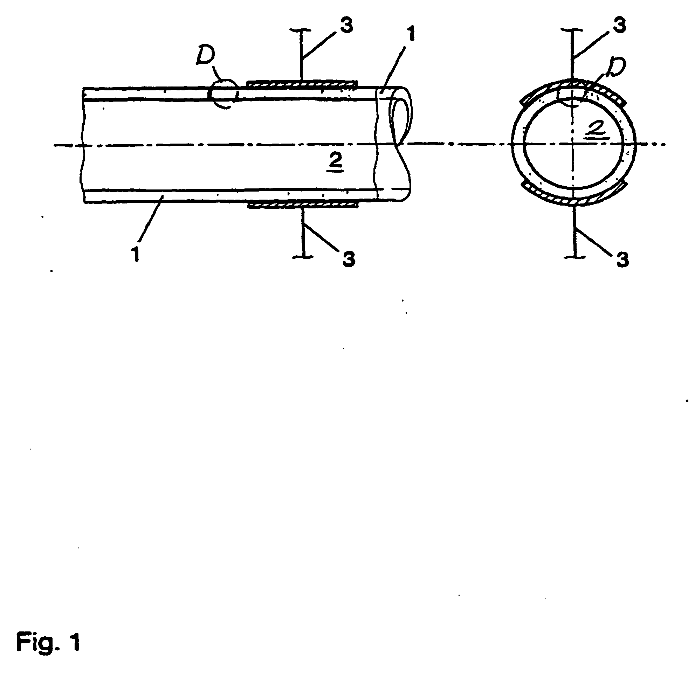

Fig. 1 zeigt in einem Längs- und einem Querschnitt einen Laser mit einem nur teilweise dargestellten Laserrohr 1, das bei dem gezeigten Ausführungsbeispiel ohne Beschränkung des allgemeinen Erfindungsgedankens aus Quarz mit einer Wanddicke von einigen Millimetern besteht. In dem Laserrohr 1 befindet sich ein Lasergas 2, das ebenfalls ohne Beschränkung des allgemeinen Erfindungsgedankens CO₂ ist. Außerhalb des Laserrohres 1 sind Elektroden 3 angeordnet, von denen in Fig. 1 nur zwei einander gegenüberliegende Elektroden dargestellt sind. An die Elektroden 3, die das Laserrohr berühren oder mit einem kleinen Luftabstand zu diesem angeordnet sind, ist eine HF-Spannung angelegt, die das Gas 2 in dem Laserrohr 1 zu einer Laseraktivität kapazitiv anregt.

Der vorstehend beschriebene Aufbau von Gaslasern ist allgemein bekannt; hierzu wird beispielsweise auf die CO₂-Laser der Anmelderin verwiesen, auf die im übrigen auch zu allen hier nicht näher beschriebenen konstruktiven Details ausdrücklich verwiesen wird.

Bei einer Reihe von Gaslasern entsteht in der Gasentladung zusätzlich Strahlung, die häufig eine deutlich kürzere Wellenlänge als die eigentliche Laserstrahlung hat. Im Falle von CO₂-Lasern, deren Laserwellenlänge 10,6 µm ist, liegt die Wellenlänge der zusätzlichen Strahlung im Bereich vom sichtbaren Bereich zum UV-Bereich. Ein durchaus wesentlicher Teil der UV-Strahlung hat eine Wellenlänge von weniger als 250 nm.

Erfindungsgemäß ist erkannt worden, dass insbesondere die Strahlung mit einer Wellenlänge von weniger als 250 nm Defekte erzeugt, die in besonders "schädlicher" Weise mit der HF-Anregungsenergie wechselwirken können.

Diese UV-Strahlung wird zumindest teilweise von dem Material des Laserrohres 1 absorbiert. Beim Absorptionsvorgang entstehen in dem Material Defekte, u.a. E'-Farbzentren. In der Regel haben die erzeugten Defekte ein elektrisches Dipolmoment. Die Dipole der Defekte können dabei einen Teil der durch das Laserrohr 1 eingebrachten HF-Energie absorbieren.

Beispielsweise bei CO₂-Lasern, die für die Materialbearbeitung eingesetzt werden, wird HF-Energie im Bereich von mehreren kW durch das Laserrohr 1 eingebracht. Davon kann, wenn sehr viele Defekte mit einem Dipolmoment vorhanden sind, ein nicht unbeträchtlicher Teil im Laserrohr absorbiert werden.

Durch die absorbierte Energie wird das Laserrohr lokal erwärmt. Dabei kann das Material lokal Temperaturen erreichen, die über der Schmelztemperatur des Materials liegen. Durch die lokale Erwärmung und den nachfolgenden Abkühlvorgang nach dem Ausschalten des Lasers entstehen in dem Material des Laserrohres 1 Spannungen, die nach einer gewissen Betriebsdauer zu Beeinträchtigungen, wie Sprüngen bzw. Rissen führen können. Die Sprünge bzw. Risse können dabei nicht nur in dem Bereich des Laserrohres 1, der sich unterhalb der Elektroden 3 befindet, sondern an beliebigen Stellen des Laserrohres 1 auftreten.

Erfindungsgemäß sind deshalb Mittel vorgesehen, die verhindern, dass in dem Laserrohr 1 die HF-Anregungsenergie für das Lasergas in einem Umfang absorbiert wird, dass Spannungen auftreten, die zu einer Beeinträchtigung und insbesondere zu einer Zerstörung des Laserrohres 1 führen.

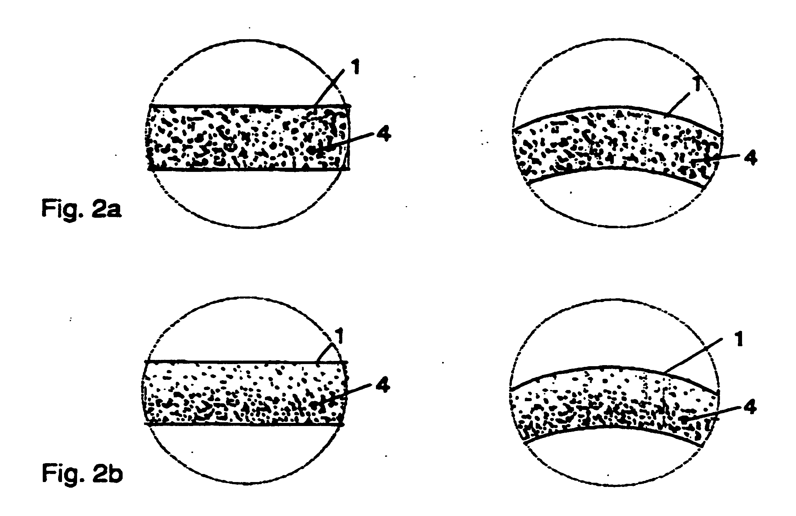

Diese Mittel werden im folgenden unter Bezugnahme auf die Figuren 2a und 2b erläutert, die Ansichten des Details D aus Fig. 1 im Längs- bzw. Querschnitt zeigen.

Fig. 2a zeigt eine erste Möglichkeit, bei der in das Material des Laserrohres 1 ein Dotiermaterial 4 homogen - beispielsweise durch Einrühren in eine SiO₂-Schmelze - eingebracht ist. Bei Laserrohren 1, die aus Quarz bestehen, kann als Dotiermaterial beispielsweise TiO₂ bzw. Titan verwendet werden.

Alternativ kann - vgl. Fig. 2b - das Dotiermaterial 4 in das Laserrohr 1 derart eingebracht sein, daß die Konzentration des Dotiermaterials 4 im Bereich der Innenseite des Laserrohres 1 am größten ist und zur Außenseite hin abnimmt. Die Konzentration wird dabei bevorzugt so hoch gewählt, dass das Licht, durch das die Defekte bzw. Fehlstellen mit einem Dipolmoment erzeugt werden, bereits in der Randschicht absorbiert wird.

Damit wird die Anregungsenergie überhaupt nicht oder nur in einem sehr kleinen Randbereich absorbiert, so dass nur geringe Spannungen auftreten. Der Großteil des Laserrohres bleibt somit frei von Spannungen, so dass sich keine Beeinträchtigungen, wie Sprünge bzw. Risse durch das Laserrohr ausbreiten können, die zu einer Undichtigkeit des Laserrohres führen können.

Verfahren, mit dem derartige "Profile der Dotiermaterial-Konzentration" hergestellt werden können, sind beispielsweise Oberflächen-Diffusionsverfahren oder Ionenaustauschverfahren.

## Patentansprüche

1. HF-angeregter CO₂-Gaslaser mit wenigstens einem ein Lasergas (2) enthaltenden Laserrohr (1) aus Titan- bzw. TiO₂-dotiertem Quarzmaterial, das eine Titan-Dotierung (4) von mehr als 150 ppm und insbesondere 500 ppm oder mehr aufweist, wobei die Dotierung (4) derart ausgelegt ist, dass eine während des Laserbetriebs neben der Laserstrahlung entstehende zusätzliche Strahlung mit einer Wellenlänge von weniger als 250 nm bereits in dem dem Lasergas (2) zugekehrten Randbereich des Laserrohrs (1) im Wesentlichen absorbiert wird.

2. Laser nach Anspruch 1, **dadurch gekennzeichnet, dass** die Dotierung (4) derart ausgelegt ist, dass der Eintritt der zusätzlichen Strahlung in das Laserrohr (1) verhindert ist.

3. Laser nach Anspruch 1 oder 2, **dadurch gekennzeichnet, dass** zur kapazitiven Anregung des Lasergases (2) wenigstens zwei Elektroden (3) vorgesehen sind, zwischen die das hochfrequente Wechselfeld angelegt ist.

4. Laser nach Anspruch 3, **dadurch gekennzeichnet, dass** wenigstens eine Elektrode außerhalb des Laserrohrs (1) angeordnet ist.

5. Laser nach Anspruch 3, **dadurch gekennzeichnet, dass** alle Elektroden außerhalb des Laserrohrs (1) angeordnet sind.

6. Laser nach einem der Ansprüche 1 bis 5, **dadurch gekennzeichnet, dass** die Dotierung (4) nur in dem bzw. den Bereichen des Laserrohrs (1) vorgesehen ist, durch die die Anregungsenergie in das Laserrohr (1) eingebracht wird.

7. Laser nach einem der Ansprüche 1 bis 6, **dadurch gekennzeichnet, dass** die Dotierung (4) homogen verteilt ist oder im Wesentlichen nur im Bereich der Innenseite des Laserrohrs (1) vorgesehen ist.

8. Laser nach einem der Ansprüche 1 bis 7, **dadurch gekennzeichnet, dass** das Dotiermaterial in das Laserrohr (1) mittels eines Oberflächen-Diffusionsverfahrens oder Ionenaustauschverfahrens eingebracht ist.

## Claims

1. RF-excited CO₂ gas laser having at least one laser tube (1) which contains a laser gas (2) and which is composed of titanium-doped or TiO₂-doped quartz material having a titanium doping (4) of more than 150 ppm and especially 500 ppm or more, the doping (4) being arranged in such a manner that additional radiation which occurs, apart from the laser radiation, during the operation of the laser and which has a wavelength of less than 250 nm is already substantially absorbed in that edge region of the laser tube (1) which faces the laser gas (2).

2. Laser according to claim 1, **characterised in that** the doping (4) is arranged in such a manner that ingress of the additional radiation into the laser tube (1) is prevented.

3. Laser according to claim 1 or 2, **characterised in that** at least two electrodes (3) between which the radio frequency alternating field is applied are provided for the capacitive excitation of the laser gas (2).

4. Laser according to claim 3, **characterised in that** at least one electrode is located outside the laser tube (1).

5. Laser according to claim 3, **characterised in that** all of the electrodes are located outside the laser tube (1).

6. Laser according to any one of claims 1 to 5, **characterised in that** the doping (4) is provided only **in that** or those regions of the laser tube (1) through which the excitation energy is introduced into the laser tube (1).

7. Laser according to any one of claims 1 to 6, **characterised in that** the doping (4) is distributed homogeneously or is provided substantially only in the region of the inside of the laser tube (1).

8. Laser according to any one of claims 1 to 7, **characterised in that** the doping material is introduced into the laser tube (1) by means of a surface diffusion process or an ion exchange process.

## Revendications

1. Laser à CO₂ excité par haute fréquence comprenant au moins un tube laser (1) contenant un gaz pour laser (2) et fabriqué dans un matériau de quartz dopé au titane ou au dioxyde de titane, qui présente un dopage en titane (4) de plus de 150 ppm et en particulier de 500 ppm ou plus, dans lequel le dopage (4) est réalisé de telle sorte qu'un rayonnement supplémentaire formé en cours de fonctionnement du laser en plus du rayonnement laser, de longueur d'onde inférieure à 250 nm, est pour l'essentiel d'ores et déjà absorbé dans la zone ou région de bord du tube laser (1) adjacente au gaz de laser (2).

2. Laser selon la revendication 1, **caractérisé en ce que** le dopage (4) est conçu de telle sorte que la pénétration du rayonnement supplémentaire dans le tube laser (1) est empêchée.

3. Laser selon la revendication 1 ou 2, **caractérisé en ce que** au moins deux électrodes (3) sont prévues pour l'excitation capacitive du gaz de laser (2) entre lesquelles est appliqué le champ alternatif à haute fréquence.

4. Laser selon la revendication 3, **caractérisé en ce que** au moins une électrode est disposée à l'extérieur du tube laser (1).

5. Laser selon la revendication 3, **caractérisé en ce que** toutes les électrodes sont disposées à l'extérieur du tube laser (1).

6. Laser selon l'une des revendications 1 à 5, **caractérisé en ce que** le dopage (4) n'est prévu que dans la seule zone ou les seules zones du tube laser (1) à travers lesquelles l'énergie excitatrice est déchargée ou introduite dans le tube laser (1)

7. Laser selon l'une des revendications 1 à 6, **caractérisé en ce que** le dopage (4) est réparti de façon uniforme ou essentiellement uniquement dans la zone de la face intérieure du tube laser (1).

8. Laser selon l'une des revendications 1 à 7, **caractérisé en ce que** le matériau de dopage est introduit dans le tube laser (1) au moyen d'un procédé de diffusion de surface ou d'un procédé par échange d'ions.
